# EUROPÄISCHE PATENTSCHRIFT

(11) **EP 0 685 683 B1**
(45) Veröffentlichungstag und Bekanntmachung des Hinweises auf die Patenterteilung: **28.10.1998**
(21) Anmeldenummer: 95106641.4
(22) Anmeldetag: 03.05.1995
(51) Int. Cl.: F23C 7/06, F23C 9/00, F23C 3/00

(54) **Industriebrenner mit geringer NOx-Emissionen und Verfahren zum Betreiben derselbe**
Industrial burner with low NOx emissions and method of operating the same
Brûler industriel à fiable émission de NOx et méthode d'utilisation de ce brûleur

(30) Priorität: 02.06.1994 DE 4419332
(43) Veröffentlichungstag der Anmeldung: 06.12.1995
(73) Patentinhaber: Wünning, Joachim, Dr.-Ing., D-71229 Leonberg (DE)
(72) Erfinder: Wünning, Joachim, Dr.-Ing., D-71229 Leonberg (DE)
(74) Vertreter: Rüger, Rudolf, Dr.-Ing.

(56) Entgegenhaltungen:
- EP-A- 0 293 168
- DE-A- 3 422 229
- US-A- 4 214 869

## Beschreibung

Die Erfindung betrifft einen Industriebrenner mit geringer NOₓ-Emission, insbesondere zur Beheizung von Ofenräumen von Industrieöfen mit einer hochhitzebeständigen Brennkammer, die mit einer Brennstoff- und einer Luftzuführungseinrichtung und mit wenigstens einem düsenförmigen Auslaß für die mit hoher Geschwindigkeit in einen Heizraum austretenden Gase ausgebildet ist und mit einer Zündeinrichtung für ein in der Brennkammer gebildetes Brennstoff-/Luftgemisch, sowie ein Verfahren zum Betrieb eines solchen Brenners.

Für die Umwandlung von Brennstoffenergie in Wärme werden zunehmend sogenannte Impuls- oder Hochgeschwindigkeitsbrenner eingesetzt. Der Brennstoff und die Verbrennungsluft werden in einer meist aus keramischem Material hergestellten hochhitzebeständigen Brennkammer miteinander vermischt und gezündet. Die entstehenden heißen Verbrennungsgase strömen durch einen düsenförmigen Auslaß mit hoher Geschwindigkeit in den Heizraum, der entweder durch den Ofenraum selbst oder den Innenraum eines Strahlheizrohres gebildet ist. Der Auslaß der Brennkammer kann düsenförmig eingeschnürt oder durch einen Düsenkranz gebildet sein, wobei die Achsen der Düsenöffnungen zueinander parallel oder voneinander divergierend ausgerichtet sein können. Die mechanische Energie des aus der Brennkammer austretenden Gasstrahls, die zum überwiegenden Teil von dem Brennstoff stammt, dient zur Vermischung und Umwälzung der Gase im Heizraum, was wiederum den Temperaturausgleich in gewünschter Weise fördert. Mit der Weiterentwicklung des keramischen Materials für hochbeanspruchte Brennkammern werden Impulsbrenner heute auch bei Prozeßtemperaturen über 800° C eingesetzt, wobei in der Regel zur Verbesserung des Wirkungsgrades die Verbrennungsluft vorgewärmt wird, was zum Beispiel in einem vorgeschalteten Rekuperator, häufig in Form eines rohrförmigen Rippen-Rekuperators geschieht.

Ein schadstoffarmer Industriebrenner mit diesem grundsätzlichen Aufbau ist aus der DE-A1 34 22 229 bekannt. Die thermische Stickoxidbildung wird dabei durch eine intensive Vermischung der Flammengase mit relativ kaltem Ofengasen vermindert (sogenannte innere Rezirkulation), wobei der Effekt durch eine gestufte Luftzufuhr gesteigert wird, wie dies in dieser Druckschrift im einzelnen erläutert ist. Trotz dieser Maßnahmen kann die NOₓ-Emission bei Brennern dieser Bauart bei einer Luftvorwärmung von 600° C über die 200 ppm-Marke steigen, womit sie in den Bereich der gesetzlichen Grenzwerte kommt.

Mit einer NOₓ-Emission von weniger als 100 ppm arbeitet ein aus der EP 0 239 168 A2 bekannter Industriebrenner, der eine außerhalb des Ofenraumes angeordnete hochhitzebeständige Brennkammer aufweist, die mit einem düsenförmigen Auslaß in ein Strahlheizrohr mündet und der eine Brennstoff- und eine Luftzuführungseinrichtung sowie eine Zündeinrichtung für ein in der Brennkammer gebildetes Brennstoff-/Luftgemisch zugeordnet sind. Die Brennstoffzuführungseinrichtung weist in einer Ausführungsform eine an der dem Verbrennungsgas-Auslaß abgewandten Rückwand der Brennkammer mündende, primäre Brennstoffdüse und eine wärmeisolierte, durch die Brennkammer durchgeführte sekundäre Brennstoffdüse auf, die in der Nähe des Verbrennungsgasauslaßes mündet. Dieser Brenner wird mit einer 2-Stufenverbrennung betrieben, bei der in die dauernd mit der gesamten Verbrennungsluft beaufschlagte Brennkammer über die primäre Brennstoffdüse ein unter 50% liegender Anteil des dem Brenner insgesamt zugeführten Brennstoffs angebracht wird. Dieser Primär-Brennstoff wird mit hohem Luftüberschuß unter Ausbildung einer langen Flamme verbrannt, welche bis zu der Mündung der sekundären Brennstoffdüse in der Nähe des Auslaßes der Brennkammer reicht. Die Verbrennung des über die sekundäre Brennstoffdüse eingebrachten restlichen Brennstoffs erfolgt mit geringem Luftüberschuß unmittelbar in dem Strahlheizrohr. Die sekundäre Brennstoffdüse kann dabei über den Verbrennungsgasauslaß der Brennkammer axial vorragen, um eine Umwälzung der Verbrennungsabgase um die sekundäre Brennstoffdüse herum zu erreichen. In den Brennstoffzuführleitungen zu der primären und sekundären Brennstoffdüse liegende Magnetventile erlauben es, beim Anfahren des Brenners das Einschalten der Brennstoffzufuhr zu der sekundären Brennstoffdüse gegenüber der primären Brennstoffdüse zeitlich etwas zu verzögern, um eine unstabile Sekundärverbrennung in dem Strahlheizrohr zu vermeiden.

Mit seiner außerhalb der Ofenkammer angeordneten Brennkammer weist dieser Brenner einen verhältnismäßig großen apparativen Aufwand auf, wobei zur Verbrennungsluftvorwärmung verwendete Rekuperator- oder Regeneratoreinrichtungen nicht in den Brenner integriert, sondern seitlich neben der Brennkammer angeordnet und mit dieser über eigene Rohrleitungen verbunden sind.

Eine weitere Absenkung der NOₓ-Emission erlaubt demgegenüber ein neuerer Impulsbrenner (EP-A1 0 463 218), bei dem nach Erreichen der Zündtemperatur im Heizraum die Verbrennungsluft vollständig auf einen außenliegenden Düsenkranz umgeschaltet wird, mit der Folge, daß in der Brennkammer keine Verbrennung mehr stattfindet. Bei einer bestimmten Düsengeometrie lassen sich dabei extrem niedrige NOₓ-Werte erreichen (unter 10 ppm). Bei extern vorgewärmter Luft sind bei diesem Brenner aber zwei Heißluftventile erforderlich, während bei der Ausbildung als Rekuperator- und Regeneratorbrenner die Verbrennungsluft beim Aufheizbetrieb nicht über die Wärmetauscher strömt.

Ein Brenner mit reduzierter NOₓ-Emission und mit Umschaltung der Brennstoffzufuhr zur Überführung des Brenners aus dem kalten Anfahr-Betriebszustand in den Normal-Betriebszustand ist schließlich noch aus der EP-A1 0 343 746 bekannt. Dieser Brenner arbeitet nicht mit einer Brennkammer; die Anordnung ist vielmehr derart getroffen, daß Luft- und Brennstoffzuführungen vorgesehen sind, die mit einem gewissen seitlichen Abstand in der Ofeninnenwand münden. Bis zum Erreichen der Zündtemperatur, d.h. beim Anfahr-Betriebszustand wird der Brennstoff in die Luftzuführleitung im Abstand von deren Mündung eingeleitet; nach Erreichen der Betriebstemperatur in der Ofenkammer erfolgt die Umschaltung auf Brennstoffdüsen, die in einem vorbestimmten Abstand seitlich der Mündung der Luftzufuhrleitung in der Ofeninnenwand angeordnet sind. Dieser Brenner weist nach Beschreibung und Zeichnung keine Merkmale auf, wie sie für einen Impulsbrenner Voraussetzung sind, nämlich einen Düsenaustritt für die Verbrennungsluft, die den Hauptanteil des Massenstromes ausmacht. Schon während des Anfahr-Betriebszustandes, d.h. beim Aufheizen bis zur Zündtemperatur findet die Verbrennung im wesentlichen im Ofenraum statt. Der Brenner ist nicht dazu eingerichtet, mit einem integrierten Rekuperator oder Regenerator betrieben zu werden.

Aufgabe der Erfindung ist es, ein Verfahren zum Betreiben eines Industriebrenners und einen als Impulsbrenner ausgebildeten Industriebrenner zu schaffen, bei dem die thermische NOₓ-Bildung weitgehend unterdrückt wird, wobei der Brenner sich bei geringer NOₓ-Emission durch kleinen apparativen Aufwand auszeichnet und das verwendete Bauprinzip erforderlichenfalls für Brenner mit integriertem Rekuperator oder Regenerator anwendbar ist.

Zur Lösung dieser Aufgabe wird der eingangs genannte Industriebrenner erfindungsgemäß nach dem Verfahren gemäß dem Patentanspruch 1 betrieben. Dabei wird die Brennkammer dauernd mit Verbrennungsluft beaufschlagt und die Brennstoffzuführeinrichtung zwischen zwei Betriebszuständen umgeschaltet, von denen in einem ersten Betriebszustand - dem Anfahrbetrieb aus dem kalten Zustand - Brennstoff unter Erzeugung eines zumindest teilweise in der Brennkammer mit stabiler Flamme verbrennenden Brennstoff-/Luftgemisches in die Brennkammer eingebracht wird. In einem zweiten Betriebszustand - dem Heizbetrieb - wird, bei oberhalb der Zündtemperatur des Brennstoff-/Luftgemisches liegender Temperatur in dem Heizraum, die Reaktion zwischen dem Brennstoff und der aus dem Auslass der Brennkammer mit hohem Austrittsimpuls austretenden Verbrennungsluft in den Heizraum verlagert, während die innerhalb der Brennkammer (im Wesentlichen) unterdrückt ist. Dabei ist zumindest in dem zweiten Betriebszustand, die Brennkammer mit einem so hohen Luftdurchsatz beaufschlagt, dass durch die aus dem Auslass der Brennkammer austretende Verbrennungsluft durch Injektorwirkung Verbrennungabgase aus dem Heizraum angesaugt und der Verbrennungsluft zugemischt werden.

Der Impulsbrenner, der eine eigene Brennkammer mit Zündeinrichtung und eingeengten Düsenaustritt für die in den Heizraum ausströmenden Gase bzw. die Verbrennungsluft aufweist, wird nach Überschreiten der Zündtemperatur im Heizraum (ca. 600 bis 800° C) durch Umschalten der Brennstoffzufuhr in den Normal-Betriebszustand gebracht, in dem der hohe Austrittsimpuls insbesondere der Verbrennungsluft aus der Brennkammer beibehalten, die Reaktion von Brennstoff und Luft in dem Bereich vor dem Düsenaustritt in der Brennkammer aber weitgehend unterdrückt und in den Heizraum verlagert ist.

Ein zur Durchführung des neuen Verfahrens eingerichteter Industriebrenner ist Gegenstand des Patentanspruchs 3.

Sehr einfache bauliche Verhältnisse ergeben sich bei diesem Industriebrenner, wenn die Brennkammer von der Luftzufuhreinrichtung mit der gesamten Verbrennungsluft beaufschlagt ist. Abhängig von dem Einsatzzweck sind aber auch Ausführungsformen denkbar, bei denen ein (geringerer) Anteil der Verbrennungsluft in dem ersten und/oder dem zweiten Betriebes zustand an der Brennkammer vorbeigeleitet wird.

Mit Rücksicht auf eine apparativ günstige Ausführung kann die Brennstoffzuführeinrichtung zwei Brennstoffdüseneinrichtungen aufweisen, von denen eine erste Düseneinrichtung innerhalb der Brennkammer im Abstand von deren Auslaß und die zweite Düseneinrichtung in der Nähe des Auslasses inner- oder außerhalb der Brennkammer mündet, wobei beiden Brennstoff-Düseneinrichtungen jeweils Ventilmittel zugeordnet sind. Dazu können die beiden Brennstoff-düseneinrichtungen an zwei konzentrischen Brennstoff lanzen ausgebildet sein. Die äußere Brennstofflanze führt zum Beispiel zu radial gerichteten Brennstoffdüsen, die eine stabile Flammenverbrennung innerhalb der Brennkammer bewirken. Die innere Brennstofflanze mündet dagegen in einer Brennstoffdüse vorzugsweise mit einer axial gerichteten Austrittsöffnung. Die Verbrennung in dem zweiten Betriebszustand findet deshalb im wesentlichen erst nach dem Austritt aus der Brennkammer statt. Dabei wird neben der Vermischung von Brennstoff und Luft durch den Strahlimpuls gleichzeitig Verbrennungsabgas aus dem Heizraum in den Luft-/Brennstoffstrahl gesaugt, womit die Reaktionstemperatur abgesenkt wird.

Die praktische Erfahrung hat gezeigt, daß mit dieser Anordnung überraschenderweise auch ohne einen seitlichen Abstand zwischen der Brennstoff- und der Luftzufuhr beim Eintritt in den Heizraum die thermische NOₓ-Bildung nahezu vollständig unterdrückt werden kann.

Grundsätzlich sind auch Ausführungsformen denkbar, bei denen die Brennstoffzuführeinrichtung wenigstens eine in axialer Richtung bezüglich des Auslasses der Brennkammer verstellbare Brennstoffdüse aufweist, die gegebenenfalls von einer im wesentlichen radialen Austrittsrichtung in eine im wesentlichen axiale Austrittsrichtung umstellbar ist.

Der Auslaß der Brennkammer, durch den der Strahlimpuls in beiden Betriebszuständen erzeugt wird, kann beispielsweise aus einer vorzugsweise konzentrischen Düse bestehen, so daß der Auslaß lediglich eine Düsenöffnung aufweist. Diese Düsenöffnung kann erforderlichenfalls auch exzentrisch zu der Brennstoffzuführeinrichtung angeordnet sein. Daneben sind auch Ausführungsformen möglich, bei denen der Auslaß der Brennkammer mehrere die Brennstoffzuführeinrichtung kranzförmig umgebende Düsenöffnungen aufweist.

Dabei ist es unter Umständen von Vorteil, wenn die Brennkammer mit einem Auslaß in Gestalt wenigstens einer Austrittsöffnung von im wesentlichen kleeblattförmiger Querschnittsgestalt ausgebildet ist, in der die Brennstoffzuführeinrichtung angeordnet ist. Durch diese Formgebung der Austrittsöffnung läßt sich ein besonders vorteilhafter Kompromiß zwischen den beiden oben genannten Varianten erzielen. Der gebildete Strahl weist nämlich eine große Mantelfläche für das Ansaugen von Verbrennungsabgasen auf. Trotzdem läßt sich diese Form der Austrittsöffnung(en) auch in keramischem Material einfach herstellen. Die Brennstoffzuführeinrichtung, beispielsweise in Gestalt der beiden konzentrischen Brennstofflanzen, ist in der Regel im Zentrum der Austrittsöffnung angeordnet, doch sind auch Ausführungsformen mit einer exzentrischen Anordnung, beispielsweise in wenigstens einem der "Blätter" der Kleeblattform möglich.

Die Brennstoffdüseneinrichtung, d.h. insbesondere auch deren Düsenaustrittsquerschnitt ist zweckmäßigerweise derart ausgebildet und bemessen, daß der austretende Brennstoff in dem zweiten Betriebszustand zumindest im wesentlichen die gleiche Geschwindigkeit wie die die Düsenaustrittsöffnung(en) umströmende Verbrennungsluft aufweist, wodurch die Vermischung zwischen dem Brennstoff und der Verbrennungsluft verzögert wird.

In dem zweiten Betriebszustand ist die Brennstoffdüse in der Regel im Bereiche des Brennkammeraustrittes angeordnet. Insbesondere bei träge reagierenden Brennstoffen, beispielsweise Erdgas, kann sie jedoch etwas in die Brennkammer zurückgezogen werden, ohne daß dadurch eine Flammenbildung in der Brennkammer selbst hervorgerufen würde. Umgekehrt sind aber auch Fälle denkbar, bei denen die Brennstoffdüse aus der Brennkammer vorragt, so daß eine Vorvermischung der Verbrennungsluft mit den Verbrennungsgasen im Ofen erreicht wird, bevor die Brennstoff zugabe zu diesem Gemisch erfolgt.

Die Umschaltventile für die Brennstoff-Düseneinrichtungen für den ersten und den zweiten Betriebszustand können stufenweise oder stetig arbeiten. Auch können für die beiden Betriebsarten verschiedene Brennstoffe eingesetzt werden, wenngleich in der Regel der Einfachheit halber lediglich ein Brennstoff für beide Betriebszustände verwendet werden wird.

Der Industriebrenner kann im übrigen auch als Rekuperatorbrenner mit einem der Brennkammer zugeordneten, im Gegenstrom von der Verbrennungsluft und den Verbrennungsabgasen durchströmten, integrierten Rekuperator ausgebildet sein, wie es auch möglich ist, den Brenner erforderlichenfalls mit einem externen Rekuperator oder einer externen Luftvorwärmung zu betreiben.

In einer alternativen Ausführungsform kann der Brenner auch als Regeneratorbrenner mit einem der Brennkammer zugeordneten, abwechselnd von der Verbrennungsluft und den Verbrennungsabgasen durchströmten Regenerator ausgebildet sein, wobei er zusammen mit wenigstens einem weiteren Regeneratorbrenner zur Beheizung des Heizraumes eingesetzt ist und die beiden Brenner dann abwechselnd im Heiz- und im Regeneratorbetrieb arbeiten.

Im übrigen kann der neue Industriebrenner je nach Ausführungsform entweder unmittelbar zur Beheizung der Ofenkammer eingesetzt werden oder aber es kann ihm auslaßseitig ein Strahlheizrohr nachgeordnet sein, das an dem abliegenden Ende verschlossen ist. In der Ausführungsform als Regeneratorbrenner kann er dabei mit dem weiteren Industriebrenner über ein der jeweiligen Brennkammer nachgeordnetes Rohr verbunden sein, das mit Vorteil im wesentlichen O-förmig ist.

Die Brennstoffe sind vorzugsweise gasförmig (z.Bsp. Erdgas, Propan, etc.); es können aber auch flüssige Brennstoffe (bspw. Öl verdampft oder zerstäubt) oder feste Brennstoffe (bspw. Kohlenstaub) verwendet werden.

In der Zeichnung sind Ausführungsbeispiele des Gegenstandes der Erfindung dargestellt. Es zeigen jeweils in schematischer Darstellung:
Fig. 1 einen Industriebrenner gemäß der Erfindung in einer ersten Ausführungsform im axialen Schnitt in einer Seitenansicht,
Fig. 2 den Industriebrenner nach Fig. 1 in einer austrittsseitigen Draufsicht auf die Brennkammer,
Fig. 3 einen Industriebrenner gemäß der Erfindung in einer Ausführungsform als Rekuperatorbrenner,
Fig. 4 einen Industriebrenner gemäß der Erfindung in einer Ausführungsform als Regeneratorbrenner im axialen Schnitt in einer Seitenansicht,
Fig. 5 den Industriebrenner nach Fig. 3 in einer abgewandelten Ausführungsform mit einem endseitig verschlossenen Strahlheizrohr im axialen Schnitt in einer Seitenansicht, und
Fig. 6 zwei Industriebrenner nach Fig. 4 in einer abgewandelten Ausführungsform mit einem gemeinsamen 0-förmigen Strahlheizrohr im axialen Schnitt in einer Seitenansicht.

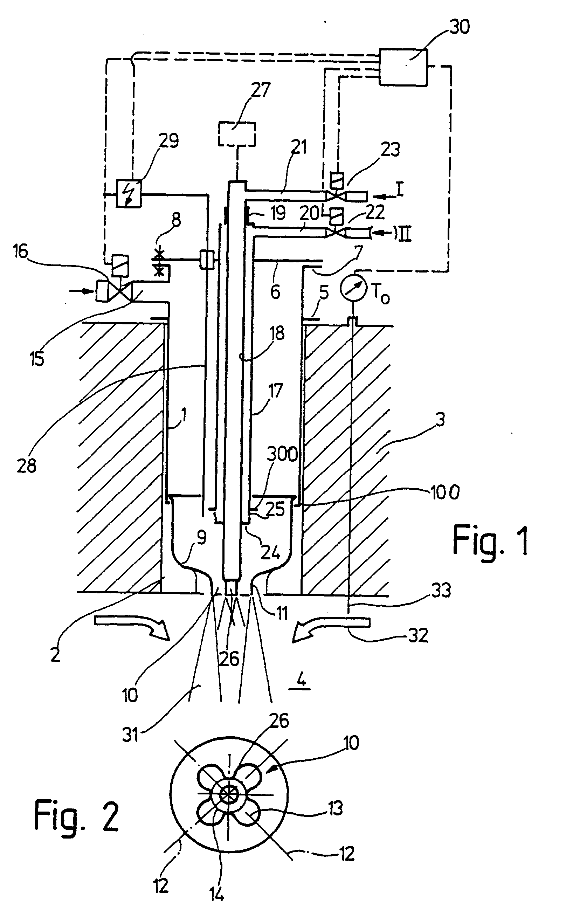

Der in den Fig. 1, 2 dargestellte Industriebrenner ist ein Impulsbrenner. Er weist ein aus Stahl oder Keramik bestehendes zylindrisches Mantelrohr 1 auf, mit dem er in eine im Durchmesser angepaßte zylindrische Öffnung 2 einer Ofenwand 3 eingesetzt ist, von der in Fig. 1 lediglich ein Ausschnitt dargestellt ist und die einen Ofenraum 4 umschließt, der in diesem Fall den Heizraum bildet. Das Mantelrohr 1 trägt einen äußeren Ringflansch 5, mit dem es gegen die Ofenwandung 3 abgedichtet ist. Es ist an seinem außenliegenden Ende durch einen Deckel 6 verschlossen, der abgedichtet mit einem Stirnflansch 7 verschraubt ist, wie dies bei 8 angedeutet ist. Zum Ofenraum 4 hin schließt sich an das Mantelrohr 1 eine topfförmige Brennkammer 9 aus einem hochhitzebeständigen Material, insbesondere Keramik an, die bei 100 über eine entsprechende Flanschverbindung abgedichtet mit dem Mantelrohr 1 verbunden ist. Die zu dem Mantelrohr 1 koaxiale Brennkammer 9 zylindrischen Querschnitts ist mit einem in den Ofenraum 4 mündenden Auslaß in Gestalt einer Austrittsöffnung 10 ausgebildet, die von einer endseitigen Einschnürung 11 der Brennkammerwandung begrenzt ist und wie aus Fig. 2 zu entnehmen, eine im wesentlichen kleeblattförmige Querschnittgestalt aufweist. Bei dem dargestellten Ausführungsbeispiel verfügt die Austrittsöffnung 10 über vier "Blätter", deren bei 12 angedeutete Achsen rechtwinklig aufeinanderstehen. Diese "Blätter" sind durch taschenartige Aussparungen 13 gebildet, welche von einem gedachten koaxialen Kreis 14 nach außen ragen. Anstelle von vier solchen "Blättern" können auch mehr (beispielsweise fünf oder sechs) oder weniger (beispielsweise (zwei) "Blätter" vorhanden sein. Auch brauchen die Aussparungen 13 nicht die in Fig. 2 veranschaulichte, im wesentlichen teilkreisförmige Umrißgestalt aufzuweisen; sie können beispielsweise auch eine dreieckförmige oder andere Profilgestalt haben.

An das Mantelrohr 1 ist außerhalb der Ofenwand 3 ein seitlicher Luftzufuhrstutzen 15 angeschlossen, in dem ein Verbrennungsluft-Ventil 16 liegt und über den gegebenenfalls vorgewärmte Verbrennungsluft zugeführt werden kann. Der Verbrennungsluft-Zufuhrstutzen 15 bildet zusammen mit dem Mantelrohr 1 und dem Verbrennungsluft-Ventil 16 die Luftzufuhreinrichtung, die ersichtlich derart gestaltet ist, daß die gesamte zugeführte Verbrennungsluft die Brennkammer 9 beaufschlagt und durch deren Austrittsöffnung 10 austritt.

Der Brennkammer 9 ist außerdem eine Brennstoffzuführeinrichtung zugeordnet, die zwei zueinander koaxiale Brennstofflanzen 17, 18 aufweist, von denen die äußere Brennstofflanze 17 abgedichtet in dem Deckel 6 gehaltert und die innere Brennstofflanze 18 bei 19 abgedichtet mit der einen größeren Durchmesser aufweisenden äußeren Brennstofflanze 17 verbunden ist. An die beiden Brennstofflanzen 17, 18 sind außerhalb der Ofenwand 3 zwei Brennstoffzuführstutzen 20, 21 angeschlossen, von denen jeder ein Brennstoffventil 22 bzw. 23 enthält und die zu nicht weiter dargestellten in Fig. 1 mit I bzw. II bezeichneten Brennstoffquellen führen. Von den beiden Brennstoffquellen I und II können zwei verschiedene Brennstoffe zugeführt werden; alternativ - und dies ist der Regelfall - sind die beiden Brennstoffquellen I, II zu einer Brennstoffquelle vereinigt, über die die Zufuhr lediglich eines flüssigen oder gasförmigen Brennstoffes erfolgt.

Die äußere Brennstofflanze 17 ist auf beiden Stirnseiten verschlossen; sie ragt mit ihrem ofenraumseitigen Ende 24 in die Brennkammer 9. An diesem Ende ist sie an ihrem Umfang mit ersten Brennstoffdüsen 25 versehen, die im wesentlichen radial gerichtet sind und in einem verhältnismäßig großen Abstand zu der Mündung der Austrittsöffnung 10 liegen.

Die innere Brennstofflanze 18 ist abgedichtet durch das sonst geschlossene stirnseitige Ende 24 der äußeren Brennstofflanze 17 durchgeführt und ist endseitig mit einer eingeschnürten zweiten Brennstoffdüse 26 versehen, deren Mündung etwa in der Höhe der Mündung der Austrittsöffnung 10 angeordnet ist. Die eine im wesentlichen axiale Austrittsrichtung aufweisende zweite Brennstoffdüse 26 mündet etwa in der Höhe der Mündung der Austrittsöffnung 10. Abhängig von der Art des verwendeten Brennstoffes kann die innere Brennstofflanze 18 mit ihrer zweiten Brennstoffdüse 26 aber auch in Axialrichtung etwas über die Mündung der Austrittsöffnung 10 der Brennkammer 9 in den Ofenraum 4 vorragen oder aber bezüglich dieser Mündung um einen gewissen Betrag in die Ofenkammer 9 zurückgezogen sein. Die erstgenannte Anordnung wird insbesondere dann gewählt, wenn es abhängig von den Einsatzbedingungen darauf ankommt, zunächst eine gewisse Vorvermischung der aus der Austrittsöffnung 10 austretenden Verbrennungsluft mit dem im Ofenraum 4 enthaltenen Ofenabgasen zu erzielen, bevor dem Abgas-/Luftgemisch Brennstoff aus der zweiten Brennstoffdüse 26 zugeführt wird, während die zweitgenannte Anordnung, insbesondere dann in Frage kommt, wenn der über die innere Brennstofflanze 18 zugeführte Brennstoff verhältnismäßig reaktionsträge ist, wie dies beispielsweise für Erdgas gilt.

Alternativ oder zusätzlich kann insbesondere die innere Brennstofflanze 18 - gegebenenfalls und/oder die äußere Brennstofflanze 17 - axial verstellbar sein, wobei die zugeordnete Stelleinrichtung bei 27 in Fig. 1 angedeutet ist. In diesem Falle ist die innere Brennstofflanze 18 bei 19 abgedichtet verschieblich gelagert, was gegebenenfalls auch für die Durchführung der äußeren Brennstofflanze 17 durch den Deckel 6 gilt.

Seitlich neben der äußeren Brennstofflanze 17 ist durch den Deckel 7 noch eine elektrische Zündelektrode 28 elektrisch isoliert durchgeführt, die an eine elektrische Zündquelle 29 angeschlossen ist, welche zur Zündung eines in der Brennkammer 9 vorhandenen Luft-/Brennstoffgemisches erforderliche Zündimpulse liefert. Die Zündelektrode 28 wirkt mit einem in der Brennkammer 9 liegenden Zündflansch 300 auf der Außenseite der äußeren Brennstofflanze 17 in ansich bekannter Weise zusammen und bildet gemeinsam mit diesem einen Teil der Zündeinrichtung.

Die Zündquelle 29, das Verbrennungsluft-Ventil 16 und die beiden Brennstoffventile 22, 23 sind von einer Steuereinheit 30 ansteuerbar, die es erlaubt, den Brenner ein- und auszuschalten und die Umschaltung zwischen zwei Betriebszuständen vorzunehmen, die im folgenden erläutert werden.

Wie aus Fig. 2 zu entnehmen, ist die zweite Brennstoffdüse 26 koaxial zu der Austrittsöffnung 10 angeordnet. Dazu ist zu bemerken, daß auch eine exzentrische Anordnung zu der Austrittsöffnung 10 denkbar ist, wie es auch möglich wäre, für bestimmte Einsatzfälle die zweite Brennstoffdüse 26 durch eine Anzahl parallelgeschalteter Brennstoffdüsen zu ersetzen, die vorzugsweise in den "Blättern" 13 der kleeblattförmigen Austrittsöffnung 10 liegen.

Zum Anfahren des Brenners aus dem kalten Zustand wird der Brenner von der Steuereinheit 30 zunächst in einen ersten Betriebszustand geschaltet. In diesem Betriebszustand sind das Verbrennungsluft-Ventil 16 und das erste Brennstoffventil 22 der äußeren Brennstofflanze 17 geöffnet, während das zweite Brennstoffventil 23 der inneren Brennstofflanze 18 geschlossen ist. Die Brennkammer 9 ist somit mit der gesamten Verbrennungsluft beaufschlagt, die mit hohem Impuls aus der Austrittsöffnung 10 in Form eines Ringstrahles in den Ofenraum 4 austritt, wie er bei 31 angedeutet ist.

Der durch die radialen Düsen 25 in die Brennkammer 9 eingeführte Brennstoff wird in der Brennkammer 9 mit der Verbrennungsluft vermischt; das Luft-/Brennstoffgemisch wird über die Zündelektrode 28 gezündet. Es verbrennt in der Brennkammer 9 mit stabiler Flammenbildung, wobei die durch die Austrittsöffnung 10 austretenden Flammengase den Ofenraum 4 aufheizen. Dabei wird durch die Injektorwirkung des aus der Austrittsöffnung 10 austretenden Strahles eine Ansaugung der in dem Ofenraum enthaltenen Abgase bewirkt, wie dies durch die in Fig. 1 eingetragenen Pfeile 32 angedeutet ist.

Sowie der Ofenraum 4 auf die Zündtemperatur der der äußeren Brennstofflanze 17 zugeordneten Brennstoffs aufgeheizt ist, was durch eine in den Ofenraum 4 ragende Temperatursonde 33 festgestellt wird, schaltet die Steuereinheit 30 den Brenner in einen zweiten Betriebszustand um, wozu sie das zweite Brennstoffventil 23 schließt und das erste Brennstoffventil 22 öffnet. Diese Umschaltung kann stufenartig oder kontinuierlich erfolgen.

In diesem zweiten Betriebszustand wird über die radialen Düsen 25 kein Brennstoff mehr in die Brennkammer 9 eingeführt, mit der Folge, daß der Verbrennungsvorgang in der Brennkammer 9 im wesentlichen vollständig unterdrückt wird. Gleichzeitig wird Brennstoff nunmehr ausschließlich durch die in der Nähe der Mündung der Austrittsöffnung 10 in den Ofenraum 4 mündende axiale zweite Brennstoffdüse 26 in den Ofenraum einströmen lassen. In dem Ofenraum 4 bildet sich in der Nähe der Mündung der Austrittsöffnung 10 wegen der Injektorwirkung des mit unvermindertem Impuls aus der Austrittsöffnung 10 ausströmenden Verbrennungsluftstrahles ein Verbrennungsabgas-/Luftgemisch, in das der Brennstoff eingebracht wird. Da der Ofenraum 4 auf die Zündtemperatur des Brennstoffes aufgeheizt ist, erfolgt nunmehr die Reaktion des Brennstoffes mit der Verbrennungsluft in einer in dem Ofenraum 4 sich ausbildenden Reaktionszone, die außerhalb der Brennkammer 9 liegt.

In dieser Reaktionszone kann abhängig von den eingestellten Reaktionsbedingungen die Reaktion des Brennstoffes mit der Verbrennungsluft unter Flammenbildung erfolgen, doch kann auch eine im wesentlichen flammen- und pulsationsfreie Reaktion eingestellt werden.

Die NOₓ-Emission in dem ersten Betriebszustand, dem Anfahr-Betriebszustand ist bereits verhältnismäßig gering; sie liegt in jedem Fall unter den gesetzlich zugelassenen Grenzwerten. Im zweiten Betriebszustand, dem Normalbetriebszustand ist die NOₓ-Emission gegenüber den Verhältnissen im ersten Betriebszustand nochmals um ein bis zwei Größenordnungen abgesenkt. Sie kann abhängig von der Heizraumtemperatur sogar im Bereiche unter 1 ppm abgesenkt werden.

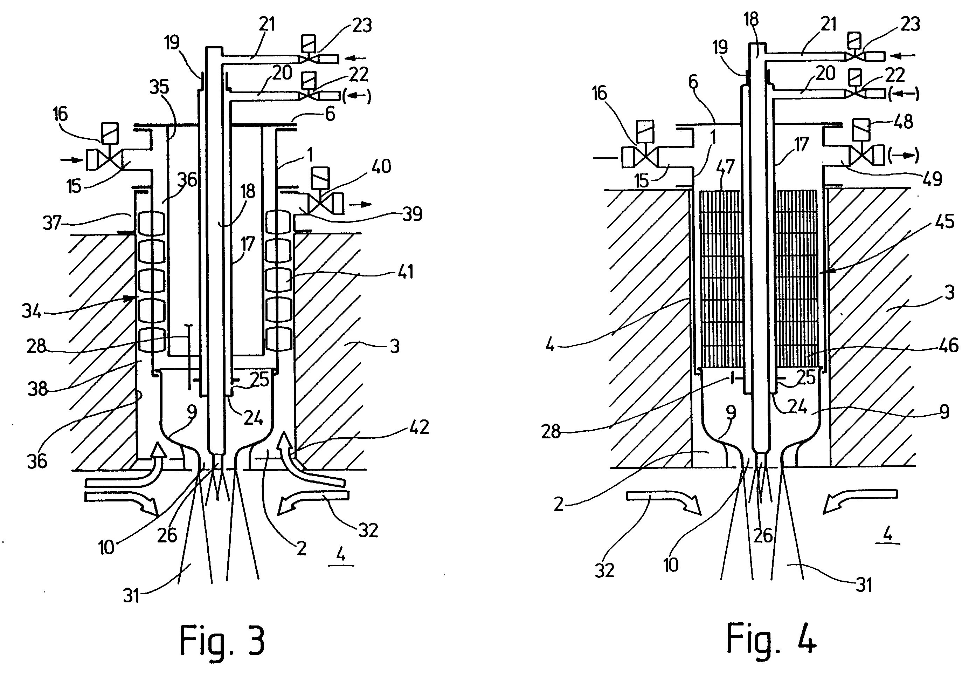

Der anhand der Fig. 1, 2 erläuterte Impulsbrenner kann ohne großen apparativen Aufwand auch als Rekuperatorbrenner gebaut und betrieben werden. Dies ist in Fig. 3 veranschaulicht. In dieser Figur sind mit den Fig. 1, 2 gleiche Teile mit den gleichen Bezugszeichen versehen; sie werden zur Vermeidung von Wiederholungen im einzelnen nicht nochmals erläutert.

Der Rekuperatorbrenner nach Fig. 3 ist mit einem integrierten Rippen-Rekuperator 34 versehen, der im Gegenstrom von den aus dem Ofenraum 4 abströmenden Abgasen und von der zuströmenden Verbrennungsluft durchströmt ist. Zu diesem Zwecke ist in das Mantelrohr 1 in mit dem Deckel 6 abgedichtet verbundener koaxialer Luftleitzylinder 35 eingesetzt, der zusammen mit dem Mantelrohr 1 einen Ringraum 36 begrenzt, in den der Luftzuführstutzen 15 mündet. Gemeinsam mit der Innenwandung 36 der Öffnung 2 in der Ofenwand und einer auf die Ofenwand 3 außen abgedichtet aufgesetzter Abgashaube 37 - oder alternativ mit einer mit der Abgashaube 37 verbundenen äußeren zylindrischen Wand - begrenzt das Mantelrohr 1 einen äußeren zweiten Ringraum 38, der mit dem Ofenraum 4 in Verbindung steht und an den ein in der Abgashaube 37 mündender Abgasstutzen 39 angeschlossen ist, welcher ein Abgasventil 40 enthält. Das Mantelrohr 1 trägt durchgehende, in die beiden Ringräume 36, 38 ragende Wärmetauscherrippen 41, die gemeinsam mit den dazwischenliegenden Mantelrohrteilen einen guten Wärmeübergang zwischen den die beiden Ringräume 36, 38 durchströmenden Medien ergeben.

Das Mantelrohr 1 bildet zusammen mit dem Luftleitzylinder 35 und der Innenwand 36 - bzw. der erwähnten äußeren zylindrischen Wand - den integrierten Rippen-Rohrrekuperator 34 in dem den durch Pfeile 42 angedeuteten, aus dem Ofenraum 4 kommenden und durch den Abgasstutzen 39 abströmenden Abgasen von der den Ringraum 36 im Gegenstrom durchströmenden Verbrennungsluft die nutzbare Wärme entzogen wird.

Auch bei dieser Ausführungsform ist die Brennkammer 9 mit der gesamten Verbrennungsluft beaufschlagt, die durch die entsprechend Fig. 2 gestaltete Austrittsöffnung 10 in den geschlossenen Ofenraum 4 austritt.

Der Brenner arbeitet ebenfalls in den beiden im Zusammenhang mit den Fig. 1, 2 erläuterten Betriebszuständen, von denen in dem ersten Betriebszustand die Verbrennung mit stabiler Flamme in der Brennkammer 9 und in dem zweiten Betriebszustand die Reaktion zwischen dem Brennstoff und der Verbrennungsluft außerhalb der Brennkammer 9 in dem Ofenraum 4 stattfindet. Die Steuereinheit 30 der Fig. 1 ist der Einfachheit halber in Fig. 3 nicht nochmals eingetragen.

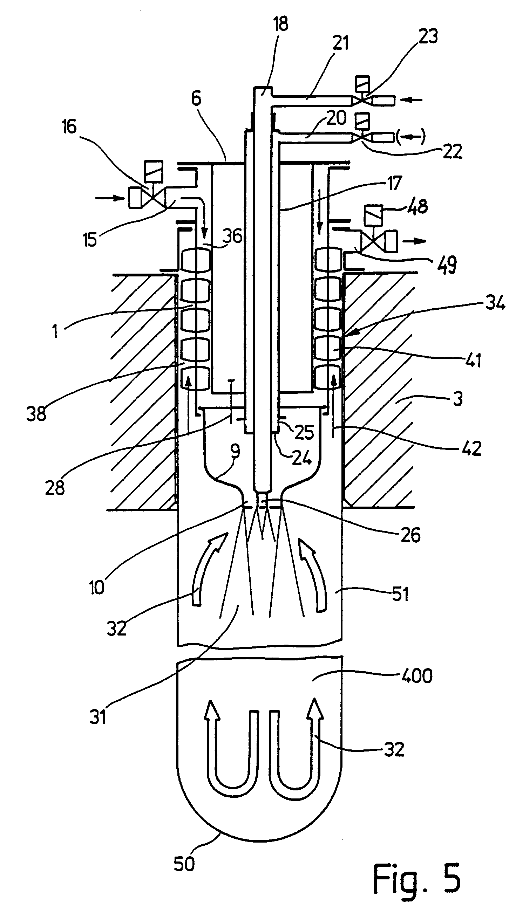

Fig. 4 zeigt den Impulsbrenner nach Fig. 1 in einer abgewandelten Ausführungsform als Regeneratorbrenner. Auch hier sind mit den Fig. 1, 2 gleiche Teile mit gleichen Bezugszeichen versehen und nicht nochmals erläutert. In die von dem Mantelrohr 1 und der äußeren Brennstofflanze 17 umschlossenen zylindrischen Ringkammer ist oberhalb der Brennkammer 9 ein keramischer Scheiben-Regenerator 45 eingesetzt, der die Brennkammer 9 nach oben abschließt. Er besteht aus einer Anzahl koaxialer, übereinander gestapelter Keramikscheiben 46, die enge axiale Durchtrittskanäle 47 für gasförmige Medien aufweisen.

Der Regeneratorbrenner wird absatzweise in zwei Betriebszyklen betrieben, wie dies bei Regeneratorbrennern allgemein bekannt ist. Während eines ersten Betriebszyklus wird der Regenerator 45 bei abgesperrter Brennstoff- und Verbrennungsluftzufuhr von heißen Ofenabgasen durchströmt, die aus dem Ofenraum 4 kommend durch einen seitlich von dem Mantelrohr 1 abgehenden und ein Ventil 48 enthaltenden Abgasstutzen 49 abgezogen werden. Dabei geben die Abgase ihre nutzbare Wärme an die Regeneratorscheiben 46 ab, d.h. der Regenerator 45 wird aufgeheizt.

Sowie der Regenerator 45 aufgeheizt ist, wird durch Schließen des Abgasventiles 48 und Öffnen des Verbrennungsluft-Ventiles 16 der zweite Betriebszyklus eingeleitet, in den die Regeneratorscheiben 46 im umgekehrten Sinne von der Verbrennungsluft durchströmt werden und damit die Verbrennungsluft vor ihrem Eintritt in die Brennkammer 9 vorwärmen. Die vorgewärmte Verbrennungsluft tritt mit hohem Impuls durch die düsenartig eingeschnürte Austrittsöffnung 10 in den Ofenraum 4 aus, in welchem sie durch Injektorwirkung, wie durch die Pfeile 32 angedeutet, Ofenabgase ansaugt und sich mit diesen vermischt. In das so gebildete Verbrennungsluft-/Abgasgemisch wird wieder über die axiale Brennstoffdüse 26 der inneren Brennstofflanze 18 Brennstoff eingebracht, der außerhalb der Brennkammer 9 in dem Ofenraum 4 mit der Verbrennungsluft reagiert, wie dies den bereits erläuterten zweiten Betriebszustand des Brenners entspricht.

Der Brenner arbeitet solange in diesem zweiten Betriebszustand, bis die in dem Regenerator 45 gespeicherte Wärmemenge so weit aufgebraucht ist, daß der Regenerator von neuem aufgeheizt werden muß. Wenn dieser Zeitpunkt erreicht ist, wird er durch Schließen des Verbrennungsluftventiles 16 und Öffnen des Abgasventiles 48 bei gleichzeitigem Abschalten der Brennstoffzufuhr wieder in den Aufheizzyklus überführt.

Um derart taktweise betrieben werden zu können, arbeitet der Regeneratorbrenner zur Beheizung des Ofenraumes 4 mit wenigstens einem weiteren Brenner zusammen, wobei jeweils während des Aufheizzyklus des Regenerators 45 eines Brenners die Beheizung des Ofenraumes 4 durch wenigstens einen anderen Brenner erfolgt, der in der Regel ebenfalls als Regeneratorbrenner ausgebildet ist.

Im Anfahrbetrieb, d.h. bei zunächst noch kaltem Ofenraum 4 arbeitet der Regeneratorbrenner zunächst ohne Luftvorwärmung in dem anhand der Fig. 1, 2 geschilderten ersten Betriebszustand, in dem über die äußere Brennstofflanze 17 und die radialen Brennstoffdüsen 25 zugeführter Brennstoff innerhalb der Brennkammer 9 mit der diese beaufschlagenden Verbrennungsluft unter stabiler Flammenbildung verbrennt. Sowie in dem Ofenraum 4 die Zündtemperatur des Brennstoffes erreicht ist, wird wenigstens ein Brenner in den zweiten Betriebszustand umgeschaltet, in dem die Reaktion des Brennstoffes mit der Verbrennungsluft außerhalb der Brennkammer 9 in dem Ofenraum 4 stattfindet. Schon während des Anfahrbetriebes wird der Regenerator eines weiteren Brenners aufgeheizt. Sowie der Regenerator 45 dieses Brenners aufgeheizt ist, übernimmt er die Beheizung des Ofenraumes, während der Regenerator 45 des erstgenannten Brenners nunmehr in den Aufheizzyklus übergeht, usf.

Während bei den beschriebenen Ausführungsformen nach den Fig. 1 bis 4 die Austrittsöffnung 10 der Brennkammer 9 sich unmittelbar in den Ofenraum 4 öffnet, so daß in dem zweiten Betriebszustand die Reaktion zwischen dem Brennstoff und der Verbrennungsluft auch in dem Ofenraum im Abstand vor der Brennkammer 9 stattfindet, läßt sich das neue Brennerprinzip auch ohne weiteres für Brennerbauarten verwenden, bei denen der Ofenraum 4 über ein Strahlheizrohr indirekt beheizt wird. In diesen Fällen liegt der eigentliche Heizraum innerhalb des abgeschlossenen Strahlheizrohres.

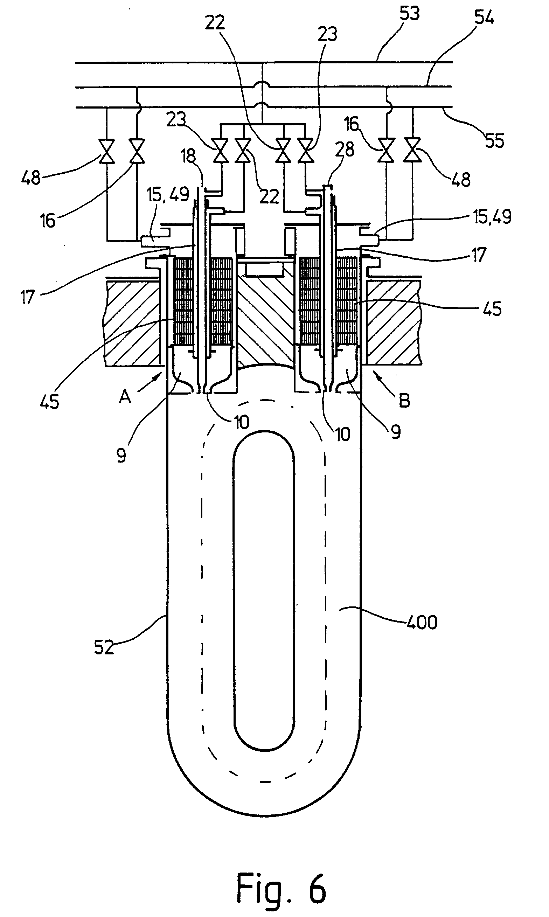

Zwei Beispiele dieser Art sind anhand von Abwandlungen des Rekuperatorbrenners nach Fig. 3 und des Regeneratorbrenners nach Fig. 4 in den Fig. 5, 6 veranschaulicht. In beiden Figuren sind für gleiche Teile die gleichen Bezugszeichen wie in den Fig. 3, 4 verwendet. Diese Teile sind deshalb nicht nochmals erläutert.

Der in Fig. 5 dargestellte Rekuperatorbrenner unterscheidet sich von jenem nach Fig. 3 lediglich dadurch, daß mit der Abgashaube 37 ein endseitig bei 50 verschlossenes zylindrisches Mantelstrahlrohr 51 abgedichtet verbunden ist, das gemeinsam mit dem Mantelrohr 1 den Ringraum 38 des Rekuperators 34 begrenzt. Der Heizraum 400 ist durch den Innenraum des Mantelstrahlrohres 51 gebildet, in dem in der Regel noch ein koaxiales keramisches Flammrohr in an sich bekannter Weise enthalten ist, das in der schematischen Zeichnung der besseren Übersichtlichkeit wegen weggelassen ist.

Der Brenner arbeitet im übrigen gleich wie der Rekuperatorbrenner nach Fig. 3 in zwei Betriebszuständen. Auf die diesbezüglichen Erläuterungen zur Fig. 3 kann deshalb Bezug genommen werden.

In Fig. 6 ist eine Heizeinrichtung dargestellt, die aus zwei Regeneratorbrennern nach Fig. 4 besteht, deren Mantelrohre 1 jedoch durch ein Rohr 52 miteinander verbunden sind, das eine im wesentlichen O-förmige Gestalt aufweist und innen den Heizraum 400 enthält.

Die beiden Regeneratorbrenner, die der besseren Unterscheidung wegen mit A und B bezeichnet sind, arbeiten abwechselnd im Aufheiz- und im Luftvorwärmzyklus. Während beispielsweise der Regeneratorbrenner A mit aufgeheiztem Regenerator 45 in dem anhand der Fig. 1, 2 erläuterten zweiten Betriebszustand arbeitet, wird über das O-förmige Rohr 52 die nach außen abzuführende Abgasmenge dem zweiten Regeneratorbrenner B zugeleitet, dessen Regenerator 45 damit aufgeheizt wird.

Sowie diese Aufheizung des Regenerators 45 des zweiten Regeneratorbrenners B beeendet ist, werden beide Regeneratorbrenner A, B in den jeweils anderen Zyklus umgeschaltet, d.h. der Regeneratorbrenner B übernimmt nunmehr die Beheizung des Heizraums 400, während bei dem Regeneratorbrenner A der Regenerator 45 seinen Wärmespeicher auffüllt.

Die Umschaltung der beiden Regeneratorbrenner A, B zwischen den beiden Betriebszyklen, wie auch zwischen dem ersten und dem zweiten Betriebszustand entsprechend den Erläuterungen der Fig. 1, 2 geschieht durch entsprechende Umschaltung der Brennstoffverbrennungsluft- und Abgasventile 22, 23, 16 und 48, die, wie aus Fig. 6 zu ersehen, jeweils gruppenweise an eine gemeinsame Brennstoffleitung 53, eine gemeinsame Verbrennungsluftleitung 54 und eine gemeinsame Abgasleitung 55 angeschlossen sind. Die in Fig. 6 dargestellte Heizeinrichtung mit zwei Regeneratorbrennern ist vom Aufbau her besonders kostengünstig und eignet sich insbesondere auch für kleinere Heizleistungen in der Größenordnung von ca. 50 bis 100 KW.

An einem praktisch ausgeführten Rekuperatorbrenner nach Fig. 3 gewonnene Meßwerte bezüglich der thermischen NOₓ-Bildung sollen kurz angegeben werden:

Für den Rekuperatorbrenner gelten folgende Abmessungen und Betriebsdaten:
Brenngas: Erdgas
Luftverhältnis: λ ≈ 1,1
Leistung: 30 KW
Luftvorwärmung: 0,7 x Heizraumtemperatur in °C
Querschnitt der Brennkammerdüse (Auslaßöffnung 10) : 3 cm²
Querschnitt der Brennstoffdüse (26) der inneren Brennstofflanze (18): 0,3 cm²

Die Messung der thermischen NOₓ-Bildung in ppm NOₓ im Ofenabgas in Abhängigkeit von der durch die Temperatursonde 33 (Fig. 1) gemessenen Heizraumtemperatur zeigt, daß in dem ersten oder Anfahr-Betriebszustand bei der Verbrennung des Brennstoffs in der Brennkammer 9 eine NOₓ-Emission auftritt, die noch weit unter den gesetzlich zulässigen Grenzwerten liegt.

Nach Erreichen der Zündtemperatur des Brennstoffes in dem Heizraum und der Umschaltung auf den zweiten Betriebszustand wird die thermische NOₓ-Bildung um wenigstens eine Größenordnung gegenüber dem ersten Betriebszustand abgesenkt.

Dabei hängt die thermische NOₓ-Bildung in dem zweiten Betriebszustand von den Abmessungen des Heiz- oder Reaktionsraumes ab. Bei freier Rezirkulation in einem großen Heizraum (> 10 dm³/KW) wurden NOₓ-Werte < 1 ppm gemessen. Das bedeutet, daß gegenüber den Verhältnissen in dem ersten Betriebszustand eine Absenkung der NOₓ-Emission um 2 Größenordnungen erreicht wird.

Bei mehr beengten Verhältnissen, wie sie z. Bsp. in Strahlrohren für die indirekte Beheizung entsprechend Fig. 4 (φ 150 mm) vorliegen können (> 1 dm³/KW) steigt die NOₓ-Bildung bei 800° C Heizraumtemperatur auf ca. 10 ppm an. Sie liegt damit aber immer noch um eine Größenordnung tiefer als die für den ersten Betriebszustand geltenden Werte.

Insgesamt gilt, daß bei Heizraumtemperaturen über 1500° C die NOₓ-Werte steil nach oben gehen, weil der Stickstoff mit dem Sauerstoff der Luft in zunehmendem Maße auch ohne Verbrennungsreaktion reagiert.

## Patentansprüche

1. Verfahren zum Betreiben eines Industriebrenners mit geringer NOx-Emission, insbesondere zur Beheizung von Ofenräumen von Industrieöfen, mit einer hochhitzebeständigen Brennkammer (9), die mit einer Brennstoff- und einer Luftzuführungseinrichtung und mit wenigstens einem düsenförmigen Auslass (10) für die mit hoher Geschwindigkeit in einen Heizraum austretenden Gase ausgebildet und mit einer Zündeinrichtung (28) für ein in der Brennkammer gebildetes Brennstoff/Luftgemisch versehen ist, wobei die durch die Brennkammer geführte Brennstoffzuführeinrichtung (17, 18) Brennstoffdüseneinrichtungen (25, 26) mit verschiedener räumlicher Lage bezüglich des Auslasses der Brennkammer aufweist,
dadurch gekennzeichnet, dass
die Brennkammer (9) dauernd mit Verbrennungsluft beaufschlagt und die Brennstoffzuführeinrichtung (17, 18) zwischen zwei Betriebszuständen umgeschaltet wird, von denen in einem ersten Betriebszustand - dem Anfahrbetrieb aus dem kalten Zustand - Brennstoff unter Erzeugung eines zumindest teilweise in der Brennkammer (9) mit stabiler Flamme verbrennenden Brennstoff-/Luftgemisches in die Brennkammer eingebracht und in einem zweiten Betriebszustand - dem Heizbetrieb -, bei oberhalb der Zündtemperatur des Brennstoff-/Luftgemisches liegender Temperatur in dem Heizraum die Reaktion zwischen dem Brennstoff und der aus dem Auslass (10) der Brennkammer mit hohem Austrittsimpuls austretenden Verbrennungsluft in den Heizraum verlagert und innerhalb der Brennkammer im Wesentlichen unterdrückt ist und dass zumindest in dem zweiten Betriebszustand die Brennkammer mit einem so hohen Luftdurchsatz beaufschlagt ist, dass durch die aus dem Auslass der Brennkammer austretende Verbrennungsluft durch Injektorwirkung Verbrennungabgase aus dem Heizraum angesaugt und der Verbrennungsluft zugemischt werden.

2. Verfahren nach Anspruch 1, dadurch gekennzeichnet, daß die Brennkammer von der Luftzufuhreinrichtung mit der gesamten Verbrennungsluft beaufschlagt wird.

3. Industriebrenner zur Durchführung des Verfahrens nach Anspruch 1, mit
- einer hochhitzebeständigen, topfförmigen Brennkammer (9), die mit wenigstens einem düsenförmigen Auslass (10) für mit hoher Geschwindigkeit in einen Heizraum austretende Gase ausgebildet ist,
- einem in eine Öffnung einer Ofenwand einsetzbaren, zu der Brennkammer (9) koaxialen Rohr (1), das an seinem dem Heizraum zugewandten Ende mit der sich anschliessenden Brennkammer verbunden ist und das einen Teil einer die Brennkammer im Betrieb dauernd mit Verbrennungsluft beaufschlagenden Verbrennungsluftzuführeinrichtung bildet,
- einer durch die Brennkammer (9) geführten, Brennstoffdüsen-Einrichtungen (25, 26) aufweisenden Brennstoffzuführeinrichtung, die zwischen einem ersten und einem zweiten Betriebszustand mit verschiedener räumlicher Lage der Brennstoffdüseneinrichtungen bezüglich des düsenförmigen Auslasses (10) der Brennkammer (9) umschaltbar ausgebildet ist, wobei die Brennstoffdüsen-Einrichtungen in dem ersten Betriebszustand im Abstand von dem düsenförmigen Auslass in der Brennkammer und in dem zweiten Betriebszustand in der Nähe der Mündung des düsenförmigen Auslasses in den Heizraum wirksam sind,
- einer Zündeinrichtung (28) für in der Brennkammer gebildetes Brennstoff-/Luftgemisch und
- einer Steuereinheit (30) zur Umschaltung der Brennstoff zuführeinrichtungen zwischen deren beiden Betriebszuständen, wobei
- in dem ersten Betriebszustand - dem Anfahrbetrieb aus dem kalten Zustand - Brennstoff durch die Brennstoffdüseneinrichtungen lediglich in die Brennkammer (9) und in dem zweiten Betriebszustand - dem Heizbetrieb bei oberhalb der Zündtemperatur des Brennstoff/Luftgemisches liegender Temperatur in dem Heizraum - bei zumindest im Wesentlichen abgesperrter Brennstoffzufuhr zu der Brennkammer (9), Brennstoff durch die Brennstoffdüseneinrichtungen lediglich im Wesentlichen in der Nähe des düsenförmigen Auslasses (10) der Brennkammer (9) in den aus diesem austretenden Luftstrom einbringbar ist, dem durch Injektorwirkung angesaugte Verbrennungsabgase beigemischt sind.

4. Industriebrenner nach Anspruch 3, dadurch gekennzeichnet, daß die Brennstoffzuführeinrichtung (17, 18) zwei Brennstoffdüseneinrichtungen aufweist, von denen eine erste Düseneinrichtung (25) innerhalb der Brennkammer (9) im Abstand von deren Auslaß (10) und die zweite Düseneinrichtung in der Nähe des Auslasses (10) inner- oder außerhalb der Brennkammer (9) mündet, und daß beiden Brennstoff-Düseneinrichtungen jeweils Ventilmittel (22, 23) zugeordnet sind.

5. Industriebrenner nach Anspruch 4, dadurch gekennzeichnet, daß die beiden Brennstoffdüseneinrichtungen (25, 26) an zwei konzentrischen Brennstofflanzen (17, 18) ausgebildet sind.

6. Industriebrenner nach einem der Ansprüche 3 bis 5, dadurch gekennzeichnet, daß die Brennstoffzuführeinrichtung wenigstens eine in axialer Richtung bezüglich des Auslasses (10) der Brennkammer (9) verstellbare Brennstoffdüse aufweist.

7. Industriebrenner nach einem der Ansprüche 4 oder 5, dadurch gekennzeichnet, daß die beiden Brennstoffdüseneinrichtungen (25, 26) mit unterschiedlichen Brennstoffen beaufschlagbar sind.

8. Industriebrenner nach einem der Ansprüche 4 bis 7, dadurch gekennzeichnet, daß die Brennstoffzuführeinrichtung wenigstens eine radial gerichtete Brennstoffdüse (25) aufweist.

9. Industriebrenner nach einem der Ansprüche 4 bis 8, dadurch gekennzeichnet, daß die Brennstoffzuführeinrichtung wenigstens eine axial (26) gerichtete Brennstoffdüse aufweist.

10. Industriebrenner nach einem der Ansprüche 3 bis 9, dadurch gekennzeichnet, daß der Auslaß (10) der Brennkammer (9) lediglich eine zu der Brennstoffzuführeinrichtung konzentrische Düsenöffnung aufweist.

11. Industriebrenner nach einem der Ansprüche 3 bis 9, dadurch gekennzeichnet, daß der Auslaß der Brennkammer (9) mehrere die Brennstoffzuführeinrichtung (17, 18) kranzförmig umgebende Düsenöffnungen aufweist.

12. Industriebrenner nach einem der Ansprüche 3 bis 11, dadurch gekennzeichnet, daß die Brennkammer (9) einen Auslaß von im wesentlichen kleeblattförmiger Querschnittsgestalt aufweist, in dem die Brennstoffzuführeinrichtung angeordnet ist.

13. Industriebrenner nach einem der Ansprüche 3 bis 12, dadurch gekennzeichnet, daß die Brennstoffdüseneinrichtung (25, 26) derart ausgebildet und bemessen ist, daß der aus ihr austretende Brennstoff in dem zweiten Betriebszustand zumindest im wesentlichen die gleiche Geschwindigkeit wie die ihre Düsenaustrittsöffnung(en) (10) umströmende Verbrennungsluft aufweist.

14. Industriebrenner nach einem der Ansprüche, dadurch gekennzeichnet 3 bis 13, daß die den beiden Betriebszuständen der Brennstoffzuführeinrichtung (17, 18) zugeordneten Ventilmittel (22, 23) stetig oder stufenweise umschaltbar ausgebildet sind.

15. Industriebrenner nach einem der Ansprüche 3 bis 14, dadurch gekennzeichnet, daß er als Rekuperatorbrenner mit einem der Brennkammer (9) zugeordneten, im Gegenstrom von der Verbrennungsluft und den Verbrennungsabgasen durchströmten integrierten Rekuperator (34) ausgebildet ist.

16. Industriebrenner nach einem der Ansprüche 3 bis 14, dadurch gekennzeichnet, daß er als Regeneratorbrenner mit einem der Brennkammer (9) zugeordneten, von der Verbrennungsluft und den Verbrennungsabgasen durchströmten Regenerator (45) ausgebildet ist, daß er zusammen mit wenigstens einem weiteren Industriebrenner zur Beheizung des Heizraumes eingesetzt ist und daß die beiden Industriebrenner abwechselnd im Heiz- und im Regeneratorbetrieb betrieben sind.

17. Industriebrenner nach einem der Ansprüche 3 bis 16, dadurch gekennzeichnet, daß der Brennerkammer (9) auslaßseitig ein Strahlheizrohr (51) nachgeordnet ist, das an dem abliegenden Ende (50)verschlossen ist.

18. Industriebrenner nach den Ansprüchen 16 und 17, da durch gekennzeichnet, daß er mit dem weiteren Industriebrenner über ein der jeweiligen Brennkammer nachgeordnetes Rohr (52) verbunden ist, das im wesentlichen O-förmig ist.

## Claims

1. Method of operating an industrial burner with a low Nox emission, in particular for heating furnace chambers of industrial furnaces, having a high heat-resistant combustion chamber (9), which is constructed with a fuel and an air supply device and with at least one nozzle-shaped outlet (10) for gases emerging at high velocity into a heating chamber, and is equipped with an ignition device (28) for a fuel/air mixture formed in the combustion chamber, wherein the fuel supply device (17, 18) extending through the combustion chamber has fuel nozzle devices (25, 26) located in spatially different positions with respect to the outlet of the combustion chamber, characterised in that the combustion chamber (9) is continuously subjected to combustion air and the fuel supply device (17, 18) is switched over between two operating states, of which in a first operating state - the start-up operation from cold state - fuel is brought into the combustion chamber to generat:e a fuel/air mixture burning at least partially in the combustion chamber (9) with a stable flame, and in a second operating state - the heating operation - the reaction between the fuel and the combustion air emerging from the outlet (10) of the combustion chamber at a high outlet impetus is shifted into the heating chamber, at a temperature in the heating chamber lying above the ignition temperature of the fuel/air mixture, and is substantially suppressed inside the combustion chamber, and that at least in the second operating state, the combustion chamber is subjected to a high air throughput, that as a result of the combustion air emerging from the outlet of the combustion chamber, combustion exhaust gases are aspirated by injector action out of the heating chamber and admixed with the combustion air.

2. Method according to Claim 1, characterised in that the combustion chamber is subjected to all the combustion air by the air supply device.

3. Industrial burner for carrying out the method according to Claim 1, with
- a high heat-resistant pot-shaped combustion chamber (9), which is constructed with at least one nozzle-shaped outlet (10) for gases emerging at high velocity into a heating chamber,
- a tube (1), which is adapted to be inserted into an opening of the furnace wall and is coaxial to the combustion chamber (9), and which tube is connected at its end facing the heating chamber to the adjoining combustion chamber and forms a part of a combustion air supply device continuously subjecting the combustion chamber to combustion air during operation,
- a fuel supply device extending through the combustion chamber (9) and having fuel nozzle devices (25, 26), said fuel supply device being constructed to be able to switch over between a first and a second operating state with the fuel nozzle devices in a spatially different position with respect to the nozzle-shaped outlet (10) of the combustion chamber (9), whereby the fuel nozzle devices are effective in the first operating state at a distance from the nozzle-shaped outlet in the combustion chamber and in the second operating state are effective in the vicinity of the mouth of the nozzle-shaped outlet in the heating chamber,
- an ignition device (28) for the fuel/air mixture formed in the combustion chamber, and
- a control means (30) for switching over the fuel supply devices between their two operating states, whereby
- in the first operating state - the start-up operation from cold state - fuel may be brought by the fuel nozzle devices only into the combustion chamber (9), and in the second operating state - the heating operation at a temperature lying above the ignition temperature of the fuel/air mixture in the heating chamber -, with at least essentially blocked fuel supply to the combustion chamber (9), fuel may be brought by the fuel nozzle devices only substantially in the vicinity of the nozzle-shaped outlet (10) of the combustion chamber (9) into the air stream discharging from this, to which combustion exhaust gases aspirated by injector action are mixed.

4. Industrial burner according to Claim 3, characterised in that the fuel supply device (17, 18) has two fuel nozzle devices, of which a first nozzle device (25) discharges inside the combustion chamber (9) at a distance from its outlet (10) and the second nozzle device discharges in the vicinity of the outlet (10) inside or outside the combustion chamber (9), and that valve elements (22, 23) are respectively allocated to the two fuel nozzle devices.

5. Industrial burner according to Claim 4, characterised in that the two fuel nozzle devices (25, 26) are constructed on two concentric fuel lances (17, 18).

6. Industrial burner according to one of Claims 3 to 5, characterised in that the fuel supply device has at least one fuel nozzle adjustable in axial direction with respect to the outlet (10) of the combustion chamber (9).

7. Industrial burner according to one of Claims 4 or 5, characterised in that the two fuel nozzle devices (25, 26) may be subjected to different fuels.

8. Industrial burner according to one of Claims 4 to 7, characterised in that the fuel supply device has at least one radially oriented fuel nozzle (25).

9. Industrial burner according to one of Claims 4 to 8, characterised in that the fuel supply device has at least one axially (26) oriented fuel nozzle.

10. Industrial burner according to one of Claims 3 to 9, characterised in that the outlet (10) of the combustion chamber (9) has only one nozzle opening concentric to the fuel supply device.

11. Industrial burner according to one of Claims 3 to 9, characterised in that the outlet of the combustion chamber (9) has several nozzle openings annularly surrounding the fuel supply device (17, 18).

12. Industrial burner according to one of Claims 3 to 11, characterised in that the combustion chamber (9) has an outlet of substantially cloverleaf-like cross-sectional shape, in which the fuel supply device is located.

13. Industrial burner according to one of Claims 3 to 12, characterised in that the fuel nozzle device (25, 26) is constructed and dimensioned in such a way that the fuel discharging from it in the second operating state has at least substantially the same velocity as the combustion air flowing around its nozzle outlet(s) (10).

14. Industrial burner according to one of Claims 3 to 13, characterised in that the valve elements (22, 23) allocated to the two operating states of the fuel supply device (17, 18) are constructed to be switched over continuously or in stages.

15. Industrial burner according to one of Claims 3 to 14, characterised in that it is constructed as a recuperator burner with an integrated recuperator (34), which is allocated to the combustion chamber (9) and through which the combustion air and the combustion exhaust gases pass in counterflow.

16. Industrial burner according to one of Claims 3 to 14, characterised in that it is constructed as a regenerator burner with a regenerator (45), which is allocated to the combustion chamber (9) and through which the combustion air and the combustion exhaust gases pass, that it is used together with at least one further industrial burner for heating the heating chamber, and that the two industrial burners are operated alternately in heating and regenerator operation.

17. Industrial burner according to one of Claims 3 to 16, characterised in that a jet heating tube (51), which is closed at the remote end (50), is located downstream of the combustion chamber (9) on the outlet side.

18. Industrial burner according to Claims 16 and 17, characterised in that it is connected to the additional industrial burner via an essentially O-shaped tube (52) located downstream of the respective combustion chamber.

## Revendications

1. Procédé d'exploitation d'un brûleur industriel à faible émission de NOx, notamment pour le chauffage d'enceintes de tours industriels, comportant une chambre de combustion (9) résistante aux hautes températures qui est équipée d'un dispositif d'alimentation en combustible et d'un dispositif d'alimentation en air, présente au moins une sortie (10) en forme de tuyère pour les gaz sortant à grande vitesse dans une chambre de chauffage, et est pourvue d'un dispositif d'allumage (28) pour un mélange combustible/air formé dans la chambre de combustion, le dispositif d'alimentation en combustible (17, 18) qui s'étend à l'intérieur de la chambre de combustion présentant des systèmes de buses à combustible (25, 26) avec des positions dans l'espace différentes par rapport à la sortie de la chambre de combustion,
caractérisé par le fait que
la chambre de combustion (9) est alimentée en permanence avec de l'air de combustion et le dispositif d'alimentation en combustible (17, 18) est commuté entre deux états de fonctionnement parmi lesquels dans un premier état de fonctionnement - démarrage à froid -, du combustible est introduit dans la chambre de combustion (9) en formant un mélange combustible/air qui brûle au moins partiellement dans la chambre de combustion avec une flamme stable et, dans un second état de fonctionnement - fonctionnement à chaud - avec une température dans la chambre de chauffage qui est supérieure à la température d'inflammation du mélange combustible/air, la réaction entre le combustible et l'air de combustion qui passe avec une impulsion de sortie élevée de la sortie (10) de la chambre de combustion dans la chambre de chauffage est essentiellement supprimée dans la chambre de combustion et par le fait qu'au moins dans le second état de fonctionnement. la chambre de combustion est alimentée avec un débit d'air si élevé que les gaz de combustion sont aspirés par effet d'injecteur hors de la chambre de chauffage par l'air de combustion s'écoulant par la sortie de la chambre de combustion et sont mélangés à l'air de combustion.

2. Procédé selon la revendication 1, caractérisé par le fait que la chambre de combustion est alimentée avec la totalité de l'air de combustion par le dispositif d'alimentation en air.

3. Brûleur industriel pour la mise en oeuvre du procédé selon la revendication 1, avec
- une chambre de combustion (9) résistante aux hautes températures qui est munie d'au moins une sortie (10) en forme de tuyère pour des gaz qui sortent avec une vitesse élevée dans une chambre de chauffage,
- un tube (1) coaxial avec la chambre de combustion (9) qui peut être inséré dans une ouverture d'une paroi du four et qui, à son extrémité tournée vers la chambre de chauffage, est connecté à la chambre de combustion contiguë et forme une partie d'un dispositif d'alimentation en air de combustion assurant l'alimentation continue en air de combustion de la chambre de combustion en fonctionnement,
- un dispositif d'alimentation en combustible comportant des systèmes de buses à combustible (25, 26) qui s'étend dans la chambre de combustion (9) et peut être commuté entre un premier et un second état de fonctionnement avec des positions dans l'espace différentes des systèmes de buses à combustible par rapport à la sortie en forme de tuyère (10) de la chambre de combustion, les systèmes de buses à combustible étant actifs, dans le premier état de fonctionnement, à distance de la sortie en forme de tuyère dans la chambre de combustion et, dans le second état de fonctionnement, dans le voisinage de l'embouchure de la sortie en forme de tuyère dans la chambre de chauffage,
- un dispositif d'allumage (28) pour le mélange combustible/air formé dans la chambre de combustion,
- une unité de commande (30) pour commuter les dispositifs d'alimentation en combustible entre leurs deux états de fonctionnement,
- dans le premier état de fonctionnement - démarrage à froid - du combustible étant introduit par les systèmes de buses à combustible uniquement dans la chambre de combustion (9) et dans le second état de fonctionnement - fonctionnement à chaud avec une température dans la chambre de chauffage qui est supérieure à la température d'inflammation du mélange combustible/air - l'alimentation en combustible dans la chambre de combustion (9) étant au moins essentiellement fermée, du combustible est introduit par les systèmes de buses à combustible uniquement essentiellement dans le voisinage de la sortie (10) en forme de tuyère de la chambre de combustion (9), dans le flux d'air sortant de ladite chambre de combustion, auquel les gaz de combustion aspirés par effet d'injecteur sont mélangés.

4. Brûleur industriel selon la revendication 3, caractérisé par le fait que le dispositif d'alimentation en combustible (17, 18) présente deux systèmes de buses à combustible parmi lesquels un premier système de buses (25) débouche dans la chambre de combustion (9), à distance de la sortie (10) de celle-ci, et le deuxième système de buses débouche dans le voisinage de la sortie (10), à l'intérieur ou à l'extérieur de la chambre de combustion (9); et par le fait que des vannes (22, 23) sont associées aux deux systèmes de buses à combustible .

5. Brûleur industriel selon la revendication 4, caractérisé par le fait que les deux systèmes de buses à combustible (25, 26) sont disposés sur deux lances à combustible (17, 18) concentriques.

6. Brûleur industriel selon une des revendications 3 à 5, caractérisé par le fait que le dispositif d'alimentation en combustible comporte au moins une buse à combustible réglable dans la direction axiale par rapport à la sortie (10) de la chambre de combustion (9).

7. Brûleur industriel selon une des revendications 4 ou 5, caractérisé par le fait que les deux systèmes de buses à combustible (25, 26) peuvent être alimentés avec des combustibles différents.

8. Brûleur industriel selon une des revendications 4 à 7, caractérisé par le fait que le dispositif d'alimentation en combustible comporte au moins une buse à combustible (25) orientée dans la direction radiale.

9. Brûleur industriel selon une des revendications 4 à 8, caractérisé par le fait que le dispositif d'alimentation en combustible comporte au moins une buse à combustible (26) orientée dans la direction axiale.

10. Brûleur industriel selon une des revendications 3 à 9, caractérisé par le fait que la sortie (10) de la chambre de combustion (9) présente seulement un orifice de buse concentrique avec le dispositif d'alimentation en combustible.

11. Brûleur industriel selon une des revendications 3 à 9, caractérisé par le fait que la sortie de la chambre de combustion (9) présente plusieurs orifices de buses qui sont disposés en couronne autour du dispositif d'alimentation en combustible (17, 18).

12. Brûleur industriel selon une des revendications 3 à 11, caractérisé par le fait que la chambre de combustion (9) présente une sortie a section essentiellement en forme de feuille de trèfle dans laquelle le dispositif d'alimentation en combustible est disposé.

13. Brûleur industriel selon une des revendications 3 à 12, caractérisé par le fait que le système de buses à combustible (25, 26) est agencé et dimensionné de telle sorte que le combustible qui en sort dans le second état de fonctionnement présente au moins essentiellement la même vitesse que l'air de combustion qui s'écoule autour du (des) orifice(s) de sortie des buses.

14. Brûleur industriel selon une des revendications 3 à 13, caractérisé par le fait que les vannes (22, 23) associées aux deux états de fonctionnement du dispositif d'alimentation en combustible (17, 18) peuvent être commutées de manière progressive ou par paliers.

15. Brûleur industriel selon une des revendications 3 à 14, caractérisé par le fait qu'il est agencé en brûleur à récupération avec un récupérateur (34) intégré associé à la chambre de combustion (9), dans lequel l'air de combustion et les gaz de combustion circulent à contre-courant.

16. Brûleur industriel selon une des revendications 3 à 14, caractérisé par le fait qu'il est agencé en brûleur à régénération avec un régénérateur (45) associé à la chambre de combustion (9), traversé par l'air de combustion et les gaz de combustion, par le fait qu'il est utilisé conjointement avec au moins un brûleur industriel supplémentaire pour le chauffage de la chambre de chauffage et par le fait que les deux brûleurs industriels fonctionnent alternativement en chauffage et en régénération.

17. Brûleur industriel selon une des revendications 3 à 16, caractérisé par le fait qu'un tube de chauffage à jet (51) est associé à la chambre de combustion (9) côté sortie, lequel tube est fermé à son extrémité (50) éloignée.

18. Brûleur industriel selon les revendications 16 et 17, caractérisé par le fait qu'il est lié au brûleur industriel supplémentaire par l'intermédiaire d'un tube (52) essentiellement en forme de O associé à la chambre de combustion concernée.
